# EUROPÄISCHE PATENTSCHRIFT

(11) **EP 3 983 853 B1**
(45) Veröffentlichungstag und Bekanntmachung des Hinweises auf die Patenterteilung: **01.11.2023**
(21) Anmeldenummer: 20723860.1
(22) Anmeldetag: 06.05.2020
(51) Int. Cl.: G05B 19/042

(54) **FELDGERÄT DER AUTOMATISIERUNGSTECHNIK**
AUTOMATION FIELD DEVICE
APPAREIL DE TERRAIN DE LA TECHNIQUE DE L'AUTOMATISATION

(30) Priorität: 14.06.2019 DE 102019116193
(43) Veröffentlichungstag der Anmeldung: 20.04.2022
(73) Patentinhaber: Endress+Hauser SE+Co. KG, 79689 Maulburg (DE)
(72) Erfinder: GERWIG, Simon, 79650 Schopfheim (DE); STRITTMATTER, Christian, 79736 Rickenbach (DE); LUGLI, Roberto, 20090 Segrate (IT)
(74) Vertreter: Koslowski, Christine Adelheid
(86) Internationale Anmeldenummer: PCT/EP2020/062529
(87) Internationale Veröffentlichungsnummer: WO 2020/249322

(56) Entgegenhaltungen:
- DE-A1-102006 017 243
- US-A1- 2004 199 681

## Beschreibung

Die Erfindung bezieht sich auf ein Feldgerät der Automatisierungstechnik.

In der Automatisierungstechnik, insbesondere in der Prozessautomatisierungstechnik werden vielfach Feldgeräte eingesetzt, die zur Erfassung und/oder Beeinflussung von Prozessvariablen dienen. Zur Erfassung von Prozessvariablen dienen Sensoren, wie beispielsweise Füllstandsmessgeräte, Durchflussmessgeräte, Druck- und Temperaturmessgeräte, pH-Redoxpotentialmessgeräte, Leitfähigkeitsmessgeräte, usw., welche die entsprechenden Prozessvariablen Füllstand, Durchfluss, Druck, Temperatur, pH-Wert bzw. Leitfähigkeit erfassen. Zur Beeinflussung von Prozessvariablen dienen Aktoren, wie zum Beispiel Ventile oder Pumpen, über die der Durchfluss einer Flüssigkeit in einem Rohrleitungsabschnitt bzw. der Füllstand in einem Behälter geändert werden kann. Als Feldgeräte werden im Prinzip alle Geräte bezeichnet, die prozessnah eingesetzt werden und die prozessrelevante Informationen liefern oder verarbeiten. Im Zusammenhang mit der Erfindung werden unter Feldgeräten also insbesondere auch Remote I/Os, Funkadapter bzw. allgemein Geräte verstanden, die auf der Feldebene angeordnet sind.

Eine Vielzahl solcher Feldgeräte wird von der Firma Endress + Hauser hergestellt und vertrieben.

Diese sind historisch bedingt üblicherweise über eine Zweidrahtleitung, d.h. eine Leitung mit zwei separat ausgebildeten Adern, zu einer übergeordneten Einheit, bspw. eine Steuereinheit SPS bzw. Leitsystem, verbunden. Die Zweileiterfeldgeräte sind dabei derartig ausgebildet, dass die Mess- bzw. Stellwerte als Prozessvariable über die Zweidrahtleitung bzw. das Zweileiterkabel analog in Form eines 4-20 mA Schleifenstroms bzw. Stromsignals kommuniziert, d.h. übertragen, werden. Hierbei wird ein Schleifenstrom der Zweidrahtleitung entsprechend der erfassten Prozessgröße durch das Feldgerät bzw. die übergeordnete Einheit auf einen spezifischen Wert gestellt.

Ferner können die Feldgeräte auch über die Zweidrahtleitung mit Energie versorgt werden. Hierbei kann dem Feldgerät allerdings lediglich eine sehr begrenzte Energie zur Verfügung gestellt werden. Alternativ, in dem Fall, dass mehr Energie benötigt wird als über die Zweidrahtleitung dem Feldgerät bereitgestellt werden kann, können die Feldgeräte auch über eine Drei- oder Vierdrahtleitung angeschlossen werden. Dies kann beispielsweise notwendig sein, wenn ein erhöhtes Messintervall benötigt wird. Bei der Verwendung einer Drei- oder Vierdrahtleitung wird die Energie auf einem separat Leitungspaar übertragen und der Mess- bzw. Stellwert auf einer dritten Ader in Form eines 4-20 mA Signals übertragen.

Neben der "klassischen" Anbindung der Feldgeräte über eine Zweidrahtleitung bei der die Mess- bzw. Stellwerte über ein 4-20mA Signal übertragen werden, kommen zunehmend neuere Übertragungs- bzw. Kommunikationssysteme auf. Eines dieser Systeme ist IO-Link. IO-Link stellt ein mit Ausgabedatum September 2013 veröffentlichte Norm IEC 61131-9 unter der Bezeichnung "Single-drop digital communication interface for small sensors and actuators" (SDCI) normiertes Kommunikationssystem zur Anbindung intelligenter Sensoren und Aktoren dar.

Für gewöhnlich werden Feldgeräte seitens des Feldgeräteherstellers je nachdem, ob diese später den Mess- bzw. Stellwert über eine 4-20mA Signal oder über IO-Link übertragen sollen hergestellt. D.h. die in den Feldgeräten befindliche Feldgeräteelektronik wird hardwaremäßig so aufgebaut, dass entweder ein 4-20mA Betrieb oder ein IO-Link Betrieb möglich ist. Zusätzlich wird jede Feldgerätelektronik hardwaremäßig noch so ausgebildet, dass diese entweder für einen Zwei-, Drei- oder Vierdrahtbetrieb eingesetzt werden kann. Dies bedeutet, dass für quasi jeden Betriebszustand eine eigenständige Feldgeräteelektronik gefertigt werden muss.

DE 10 2006 017243 offenbart ein Feldgerät, das in einem ersten Betriebszustand als feldgeräteseitiges Sende-Empfangsgerät und in einem zweiten Betriebszustand als auswertegeräteseitiges Sende-Empfangsgerät betrieben werden kann. US 2004/199681 offenbart ein Feldgerät, das entweder in einem HART-Betriebszustand oder in einem Feldbus-Betriebszustand betrieben werden kann.

Es ist somit eine Aufgabe der Erfindung, ein Feldgerät mit einer einheitlichen Feldgeräteelektronik vorzuschlagen, die flexibel auf den gewünschten Betriebszustand eingestellt werden kann.

Die Aufgabe wird erfindungsgemäß gelöst durch das Feldgerät der Automatisierungstechnik gemäß Patentanspruch 1.

Das erfindungsgemäße Feldgerät der Automatisierungstechnik, umfasst:
- zumindest vier Anschlusspins zum Anschließen des Feldgerätes;
- eine Feldgeräteelektronik die dazu eingerichtet ist, in einem ersten Betriebszustand ein 4-20mA Signal über einen ersten und zweiten Anschlusspin bereitzustellen, in einem zweiten Betriebszustand über dem ersten und eine dritten Anschlusspin mit einer Versorgungsspannung versorgt zu werden und über einen vierten Anschlusspins eine IO-Link-Kommunikation zu ermöglichen oder einen ersten Schaltausgang bereitzustellen und zusätzlich an dem zweiten Anschlusspin einen zweiten Schaltausgang bereitzustellen, und in einem dritten Betriebszustand über den ersten und dritten Anschlusspin mit der Versorgungsspannung versorgt zu werden und über den vierten Anschlusspin die IO-Link-Kommunikation zu ermöglichen oder den ersten Schaltausgang bereitzustellen und zusätzlich an dem zweiten Anschlusspin einen 4-20mA Stromausgang bereitzustellen, wobei die Feldgeräteelektronik ferner dazu eingerichtet ist, so konfiguriert zu werden, dass diese wahlweise in einem der drei Betriebszustände betrieben werden kann.

Eine vorteilhafte Ausgestaltung des erfindungsgemäßen Feldgerätes sieht vor, dass die Feldgeräteelektronik ferner dazu eingerichtet ist, automatisch zu erkennen, ob über den vierten Anschlusspin die IO-Link-Kommunikation erfolgt bzw. erfolgen soll oder ob der vierte Anschlusspin als der erste Schaltausgang verwendet wird. Insbesondere kann die Ausgestaltung vorsehen, dass das automatische Erkennen in Abhängigkeit von einem Gerät, welches an dem vierten Anschlusspin angeschlossen ist, erfolgt.

Eine weitere vorteilhafte Ausgestaltung des erfindungsgemäßen Feldgerätes sieht vor, dass in dem ersten Betriebszustand, in dem das 4-20mA Signal über den ersten und zweiten Anschlusspin, der dritte und vierte Anschlusspin deaktiviert sind.

Eine weitere vorteilhafte Ausgestaltung des erfindungsgemäßen Feldgerätes sieht vor, dass die Feldgeräteelektronik dazu eingerichtet ist, über den vierten Anschlusspin, über den die IO-Link-Kommunikation realisiert wird, entsprechend einem der drei Betriebszustände konfiguriert zu werden. Insbesondere kann die Ausgestaltung vorsehen, dass die Konfiguration vor einer Inbetriebnahme des Feldgerätes in einer Automatisierungsanlage, insbesondere in bzw. während einer Montage des Feldgerätes, erfolgt.

Eine weitere vorteilhafte Ausgestaltung des erfindungsgemäßen Feldgerätes sieht vor, dass zum Betrieb der Feldgeräteelektronik in dem dritten Betriebszustand ein externer Bürdenwiderstand zwischen den zweiten Anschlusspin und den dritten Anschlusspin geschaltet ist.

Die Erfindung wird anhand der nachfolgenden Zeichnungen näher erläutert. Es zeigt:
Fig. 1: ein Blockschaltbild eines erfindungsgemäßen Feldgerätes mit einer Feldgeräteelektronik, die dazu eingerichtet ist, in einem ersten Betriebszustand betrieben zu werden,
Fig. 2: ein Blockschaltbild des erfindungsgemäßen Feldgerätes mit der Feldgeräteelektronik, die dazu eingerichtet ist, in einem zweiten Betriebszustand betrieben zu werden,
   und
Fig. 3: ein Blockschaltbild des erfindungsgemäßen Feldgerätes mit der Feldgeräteelektronik, die dazu eingerichtet ist, in einem dritten Betriebszustand betrieben zu werden.

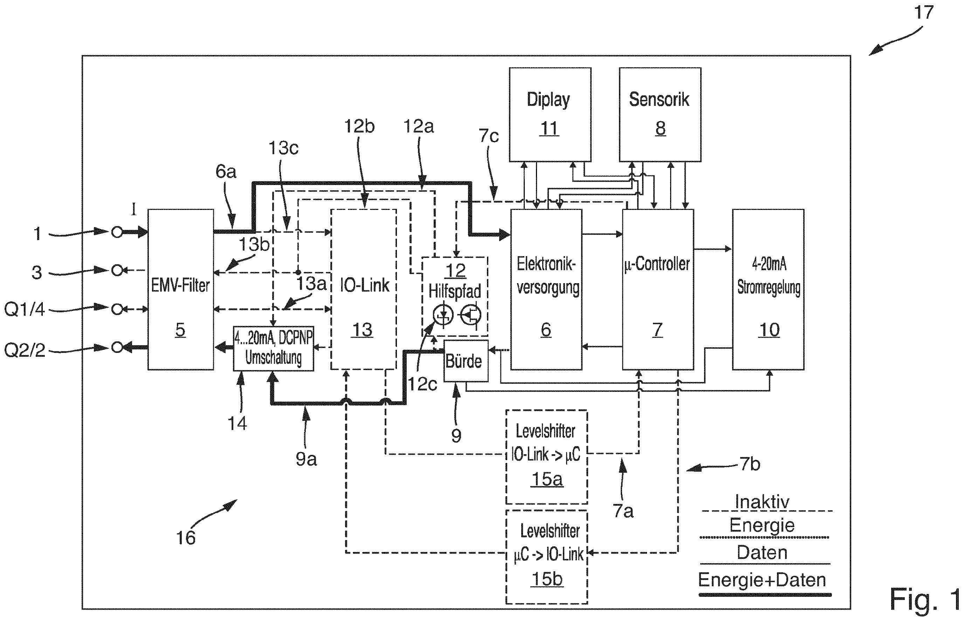

Grundsätzlich zeigen die Figuren 1 bis 3 alle ein Feldgerät 17 mit einer hardwaremäßig einheitlich gleich ausgebildeten Feldgeräteelektronik 16. Die einheitlich ausgebildet Feldgeräteelektronik umfasst jeweils vier Anschlusspins 1, 2, 3, 4 über die das Feldgerät 17 entsprechende in einer Automatisierungsanlage angeschlossen werden kann, einen EMV Filter 5, der den Anschlusspins 1, 2, 3, 4 zum Schutz des Feldgerätes 17 vor möglichen EMV Störungen nachgeschaltet ist, eine Elektronikversorgungseinheit 6 zur internen Energieversorgung, einen Mikroprozessor 7 zur internen Steuerung der Feldgeräteelektronik 16, ein Sensor- oder Aktorelement 8 zum Erfassen oder Stellen eines Mess- bzw. Stellwertes, einen Bürdenwiderstand 9 und eine 4-20mA Stromregelungseinheit 10 die zusammen mit dem Bürdenwiderstand 9 einen Stromwert I stellt. Zusätzlich weist die Feldgeräteelektronik 16 um einen IO-Link Betrieb zu ermöglichen eine Hilfsschaltung 12 zum Ausbilden eines ersten und zweiten Hilfspfades 12a, 12b und eine IO-Linkeinheit 13 zum Ermöglichen einer IO-Link Kommunikation auf. Hierbei ist die IO-Linkeinheit 13 mit einem ersten Ausgangspfad 13a über den EMV-Filter mit dem vierten Anschlusspin 4 verbunden, sodass über den vierten Anschlusspin 4 eine bidirektionale IO-Link Kommunikation erfolgen kann. Ferner ist die IO-Linkeinheit 13 mit einem Versorgungspfad 13b über den EMV-Filter 5 mit dem dritten Anschlusspin 3 und mit einem Versorgungspfad 13c über den EMV-Filter mit dem ersten Anschlusspin 1 verbunden. Die IO-Linkeinheit 13 ist zusätzlich über eine Umschaltungseinheit 14 und den EMV-Filter 5 mit dem zweiten Anschlusspin 2 verbunden. Die Umschaltungseinheit 14 ist derartig ausgebildet, dass der zweite Anschlusspin 2 entweder als ein zweiter Schaltausgang Q2 oder als ein (aktiver oder im Zweileiterbetrieb als passiver) Stromausgang, an dem ein 4-20mA Signal ausgegeben wird, betrieben werden kann. Die Konfiguration der Umschaltungseinheit 14 kann bspw. durch den Mikroprozessor erfolgen. Dieser kann beispielsweise über ein Steuersignal die Hilfsschaltung ansteuern, welche das Steuersignal an die Umschaltungseinheit weiterleitet.

Ergänzend oder alternativ kann die Konfiguration über eine IO-Link Kommunikation, bspw. durch einen an dem vierten Anschlusspin 4 angeschlossenen IO-Link Master erfolgen. Dies kann bspw. bei bzw. während der Montage des Feldgerätes 17 durch den Feldgerätehersteller erfolgen.

Um eine Steuerung der IO-Linkeinheit 13 und der Hilfsschaltung 12 zu ermöglichen, ist der Mikroprozessor mit einer ersten und einer zweiten Steuerleitung 7a und 7b mit der IO-Linkeinheit 13 und mit einer dritten Steuerleitung 7c mit der Hilfsschaltung 12 verbunden. Um mögliche Spannungspegelunterschiede zwischen Mikroprozessor 7 und IO-Linkeinheit 13 ausgleichen zu können, kann ein erster Pegelumsetzer 15a in die erste Steuerleitung 7a und ein zweiter Pegelumsetzer 15b in die zweite Steuerleitung 7b eingebracht sein.

Ferner kann die Feldgeräteelektronik ein Anzeige- und/oder Eingabeeinheit 11, bspw. in Form eines Touchdisplays umfassen. Über die Anzeige- und/oder Eingabeeinheit 11 können beispielsweise Mess- bzw. Stellwerte angezeigt werden oder eine Parametrierung des Feldgerätes 17 erfolgen.

Durch die einheitlich ausgebildet Feldgeräteelektronik 16 lässt sich diese erfindungsgemäß in unterschiedlichen Betriebszuständen betreiben. Die unterschiedlichen Betriebszustände sind in den Fig. 1 bis 3 dargestellt, wobei zur Verdeutlichung jeweils die inaktiven elektrischen Verbindungen gestrichelt, die zur Datenübertragung dienende elektrische Verbindungen mit einer dünnen Linie, die zur Energieübertragung dienenden elektrischen Verbindungen mit einer mittleren Linie bzw. einer Linie mit mittlerer Stärke und die zur Energie- und Datenübertragung dienenden elektrischen Verbindungen mit einer dicken Linie gekennzeichnet sind.

Zunächst kann die Feldgerätelektronik 16, wie in Fig. 1 dargestellt, in einem ersten Betriebszustand, einem reinen 4-20mA Zweidrahtbetrieb betrieben werden. Hierbei wird eine Zweidrahtleitung an den ersten und zweiten Anschlusspin 1 und 2 angeschlossen, umso an der Feldgeräteelektronik 16 eine Spannung anzulegen. Ein Strom I wird über die EMV-Filter 5 mit einem ersten Daten- und/oder Energieversorgungspfad bzw. 4-20mA Pfad 6a, der in dem ersten Betriebszustand ein 4-20mA Eingangspfad darstellt (in Fig. 1 durch eine dicke Linie gekennzeichnet), der Elektronikversorgungseinheit 6 zugeführt. Im ersten Betriebszustand speist der zugeführte Strom I zum einen die Elektronikversorgungseinheit 6, damit diese die interne Betriebsspannung bereitstellen kann und zum anderen führt der Strom I ein Signal in Form eines 4-20mA Signals über welches ein Mess- bzw. Stellwert übertragen werden kann. Beispielsweise kann in dem Fall, dass das Feldgerät als Sensor ausgebildet ist, d.h. ein Sensorelement aufweist, der Strom über die 4-20mA Stromregelungseinheit 10 zusammen mit dem Bürdenwiderstand 9 entsprechend einer durch das Sensorelement erfassten Prozessgröße gestellt werden, umso an eine übergeordnete Einheit (nicht dargestellt in Fig. 1) übertragen zu werden. Um den reinen 4-20mA Zweidrahtbetrieb zu ermöglichen, ist die Umschaltungseinheit 14 derartig konfiguriert, dass der von dem Bürdenwiderstand 9 über einen 4-20mA Ausgangspfad 9a kommenden Strom I zu dem zweiten Anschlusspin 2 geführt ist.

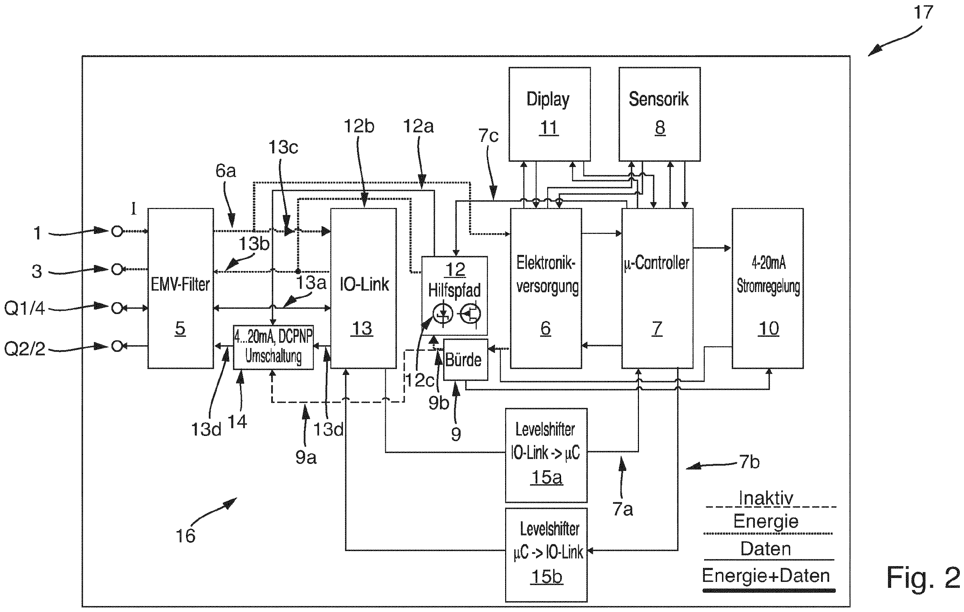

Ferner kann die Feldgeräteelektronik 16, wie in Fig. 2 dargestellt, in einem zweiten Betriebszustand betrieben werden. Im zweiten Betriebszustand wird die Feldgeräteelektronik 16 über den ersten und den dritten Anschlusspin 1, 3 mit einer Versorgungsspannung versorgt. Hierbei wird über den ersten Daten- und/oder Energieversorgungspfad bzw. 4-20mA Pfad 6a, der in dem zweiten Betriebszustand ein reiner Versorgungspfad darstellt (in Fig. 1 durch eine Linie mit mittlerer Stärke gekennzeichnet), die IO-Linkeinheit 13 und die Elektronikversorgungseinheit 6 versorgt.

Ferner wird in dem zweiten Betriebszustand über einen vierten Anschlusspin 4 eine IO-Link-Kommunikation ermöglicht oder alternativ ein erster Schaltausgang Q1 bereitgestellt. Zusätzlich wird in dem zweiten Betriebszustand an dem zweiten Anschlusspin 2 ein zweiter Schaltausgang Q2 bereitgestellt. Hierzu schaltet die Umschaltungseinheit 14 zwischen dem 4-20 mA Ausgangspfad und einem dritten Ausgangspfad 13d um. Im zweiten Betriebszustand wird die Feldgeräteelektronik 16 über einen internen Versorgungshilfspfad, welcher über eine Referenzdiode 12c geführt sein kann, versorgt. Hierzu ist allerdings eine um ca. 10 V höhere Versorgungsspannung notwendig. Die Referenzdiode 12c kann Teil der Hilfsschaltung 12 sein. Der Versorgungshilfspfad umfasst die dritte Steuerleitung 7c, den zweiten Hilfspfad 12b und einen achten Hilfspfad 9b.

Die Feldgeräteelektronik 16 kann ferner dazu eingerichtet sein, automatisch zu erkennen, ob über den vierten Anschlusspin 4 eine IO-Link Kommunikation zu einem externen IO-Link Master erfolgen soll, oder ob der vierte Anschlusspin als erste Schaltausgang Q1 verwendet werden soll. Zur automatischen Erkennung kann die Feldgeräteelektronik 16 beispielsweise dazu eingerichtet sein, den vierten Anschlusspin 4 darauf zu überwachen, ob dieser kurzfristig durch den externen IO-Link Master auf einen invertierenden Schaltzustand gezogen wird.

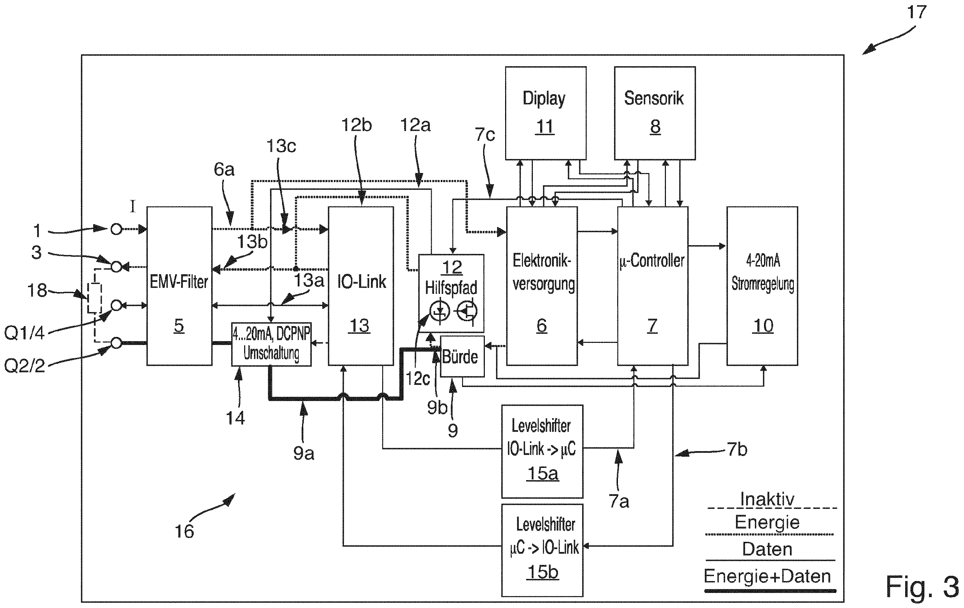

Ferner kann die Feldgeräteelektronik 16, wie in Fig. 3 dargestellt, in einem dritten Betriebszustand betrieben werden. Im dritten Betriebszustand wird die Feldgeräteelektronik 16 wieder über den ersten und dritten Anschlusspin 1, 3 mit derVersorgungsspannung versorgt. Ebenfalls wird im dritten Betriebszustand über den vierten Anschlusspin 4 die IO-Link-Kommunikation ermöglicht oder der erste Schaltausgang Q1 bereitgestellt. Zusätzlich wird an dem zweiten Anschlusspin 2 ein 4-20mA Stromausgang bereitgestellt. Im dritten Betriebszustand 18 kann ein externer (außerhalb des Feldgerätes) Bürdenwiderstand zwischen dem Anschlusspin 3 und dem Anschlusspin 2 angeschlossen sein. In diesem Fall, wird die Feldgerätelektronik über den 4-20mA Strom I, der an dem ersten Anschlusspin 1 zugeführt wird, versorgt.

Ist kein externer Bürdenwiderstand 18 zwischen den Anschlusspins 2 und 3 angeschlossen, wird die Feldgeräteelektronik 16 im dritten Betriebszustand genau wie im zweiten Betriebszustand über den internen Versorgungshilfspfad versorgt.

### Bezugszeichenliste

- 1: Erster Anschlusspin
- 2: Zweiter Anschlusspin
- 3: Dritter Anschlusspin
- 4: Vierter Anschlusspin
- 5: EMV-Filter
- 6: Elektronikversorgungseinheit
- 6a: Erste Daten- und/oder Energieversorgungspfad / 4-20mA Pfad
- 7: Mikroprozessor
- 7a: Erste Steuerleitung
- 7b: Zweite Steuerleitung
- 7c: Dritte Steuerleitung
- 8: Sensor- oder Aktorelement
- 9: Bürdenwiderstand
- 9a: 4-20mA Ausgangspfad
- 9b: Achter Hilfspfad
- 10: 4-20mA Stromregelungseinheit
- 11: Anzeige- und/oder Ausgabeeinheit
- 12: Hilfsschaltung
- 12a: Erster Hilfspfad
- 12b: Zweiter Hilfspfad
- 12c: Referenzdiode
- 13: IO-Linkeinheit
- 13a: Erster Ausgangspfad zu Anschlusspin 4
- 13b: Zweiter Ausgangspfad zu Anschlusspin 3
- 13c: Versorgungspfad
- 13d: Dritter Ausgangspfad zu Anschlusspin 2
- 14: Umschaltungseinheit
- 15a: Erster Pegelumsetzer zwischen IO-Linkeinheit und Mikroprozessor
- 15b: Zweiter Pegelumsetzer zwischen Mikroprozessor und IO-Linkeinheit
- 16: Feldgeräteelektronik
- 17: Feldgerät
- 18: Externer Bürdenwiderstand
- I: Strom
- Q1: Erster Schaltausgang
- Q2: Zweiter Schaltausgang

## Patentansprüche

1. Feldgerät der Automatisierungstechnik (F), aufweisend:
- zumindest vier Anschlusspins (1, 2, 3, 4) zum Anschließen des Feldgerätes (17);
- eine Feldgeräteelektronik (16) die dazu eingerichtet ist, in einem ersten Betriebszustand ein 4-20mA Signal über einen ersten und zweiten Anschlusspin (1, 2) bereitzustellen, in einem zweiten Betriebszustand über dem ersten und einem dritten Anschlusspin (1, 3) mit einer Versorgungsspannung versorgt zu werden und über einen vierten Anschlusspins (4) eine IO-Link-Kommunikation zu ermöglichen oder einen ersten Schaltausgang (Q1) bereitzustellen und zusätzlich an dem zweiten Anschlusspin (2) einen zweiten Schaltausgang (Q2) bereitzustellen, und in einem dritten Betriebszustand über den ersten und dritten Anschlusspin (1, 3) mit der Versorgungsspannung versorgt zu werden und über den vierten Anschlusspin (4) die IO-Link-Kommunikation zu ermöglichen oder den ersten Schaltausgang (Q1) bereitzustellen und zusätzlich an dem zweiten Anschlusspin (2) einen 4-20mA Stromausgang bereitzustellen, wobei die Feldgeräteelektronik (16) ferner dazu eingerichtet ist, so konfiguriert zu werden, dass diese wahlweise in einem der drei Betriebszustände betrieben werden kann.

2. Feldgerät der Automatisierungstechnik nach Anspruch 1, wobei die Feldgeräteelektronik (16) ferner dazu eingerichtet ist, automatisch zu erkennen, ob über den vierten Anschlusspin (4) die IO-Link-Kommunikation erfolgt bzw. erfolgen soll oder ob der vierte Anschlusspin (4) als der erste Schaltausgang (Q1) verwendet wird.

3. Feldgerät der Automatisierungstechnik nach dem vorhergehenden Anspruch, wobei das automatische Erkennen in Abhängigkeit von einem Gerät, welches an dem vierten Anschlusspin (4) angeschlossen ist, erfolgt.

4. Feldgerät der Automatisierungstechnik nach einem der vorhergehenden Ansprüche, wobei in dem ersten Betriebszustand, in dem das 4-20mA Signal über den ersten und zweiten Anschlusspin (1, 2) bereitgestellt wird, der dritte und vierte Anschlusspin (3, 4) deaktiviert sind.

5. Feldgerät der Automatisierungstechnik nach einem der vorhergehenden Ansprüche, wobei die Feldgeräteelektronik (16) dazu eingerichtet ist, über den vierten Anschlusspin (4), über den die IO-Link-Kommunikation realisiert wird, entsprechend einem der drei Betriebszustände konfiguriert zu werden.

6. Feldgeräte der Automatisierungstechnik nach dem vorhergehenden Anspruch, wobei die Konfiguration vor einer Inbetriebnahme des Feldgerätes (17) in einer Automatisierungsanlage, insbesondere in bzw. während einer Montage des Feldgerätes, erfolgt.

7. Feldgerät der Automatisierungstechnik nach einem der vorhergehenden Ansprüche, wobei zum Betrieb der Feldgeräteelektronik in dem dritten Betriebszustand ein externer Bürdenwiderstand (18) zwischen den zweiten Anschlusspin (2) und den dritten Anschlusspin (3) geschaltet ist.

## Claims

1. An automation technology field device (F), comprising:
- At least four connecting pin (1, 2, 3, 4) for connecting the field device (17);
- Field device electronics (16) which are configured to provide a 4-20 mA signal via a first and second connecting pin (1, 2) in a first operating state, to be supplied with a supply voltage via the first and a third connecting pin (1, 3) in a second operating state, and to enable IO-Link communication via a fourth connecting pin (4) or to provide a first switching output (01) via the fourth connecting pin (4), and additionally to provide a second switching output (02) at the second connecting pin (2), and to be supplied with the supply voltage via the first and third connecting pins (1, 3) in a third operating state, and to enable IO-Link communication via the fourth connecting pin (4) or to provide the first switching output (01) via the fourth connecting pin (4), and additionally to provide a 4-20 mA power output at the second connecting pin (2), wherein the field device electronics (16) are further designed to be configured so that they can be operated in any of the three operating states.

2. The automation technology field device as claimed in claim 1, wherein the field device electronics (16) are further configured to automatically detect whether IO-Link communication is taking place or is to take place via the fourth connecting pin (4), or whether the fourth connecting pin (4) is used as the first switching output (01).

3. The automation technology field device as claimed in the preceding claim, wherein the automatic detection takes place depending on a device which is connected to the fourth connecting pin (4).

4. The automation technology field device as claimed in one of the preceding claims, wherein in the first operating state, in which the 4-20 mA signal is provided via the first and second connecting pins (1, 2), the third and fourth connecting pins (3, 4) are deactivated.

5. The automation technology field device as claimed in one of the preceding claims, wherein the field device electronics (16) are designed to be configured via the fourth connecting pin (4), which is used for IO-Link communication, according to one of the three operating states.

6. The automation technology field device as claimed in the preceding claim, wherein configuration takes place before commissioning of the field device (17) in an automation system, in particular in or during field device assembly.

7. The automation technology field device as claimed in one of the preceding claims, wherein an external load resistance (18) is switched between the second connecting pin (2) and the third connecting pin (3) in order to operate the field device electronics in the third operating state.

## Revendications

1. Appareil de terrain de la technique d'automatisation (F), lequel appareil comprend :
- au moins quatre broches de raccordement (1, 2, 3, 4) destinées à raccorder l'appareil de terrain (17) ;
- une électronique d'appareil de terrain (16), laquelle est conçue pour, dans un premier état de fonctionnement, mettre à disposition un signal 4-20 mA par l'intermédiaire d'une première et d'une deuxième broche de raccordement (1, 2),
pour, dans un deuxième état de fonctionnement, être alimentée en tension par l'intermédiaire de la première et d'une troisième broche de raccordement (1, 3) et pour permettre une communication IO-Link par l'intermédiaire d'une quatrième broche de raccordement (4) ou pour mettre à disposition une première sortie de commutation (Q1) et, en outre, pour mettre à disposition une deuxième sortie de commutation (Q2) sur la deuxième broche de raccordement (2), et
pour, dans un troisième état de fonctionnement, être alimentée en tension par l'intermédiaire de la première et de la troisième broche de raccordement (1, 3) et pour permettre la communication IO-Link par l'intermédiaire de la quatrième broche de raccordement (4) ou pour mettre à disposition la première sortie de commutation (Q1) et pour mettre à disposition en outre une sortie courant 4-20 mA sur la deuxième broche de raccordement (2), l'électronique d'appareil de terrain (16) étant en outre conçue pour être configurée de manière à pouvoir fonctionner sélectivement dans l'un des trois états de fonctionnement.

2. Appareil de terrain de la technique d'automatisation selon la revendication 1, pour lequel l'électronique d'appareil de terrain (16) est en outre conçue pour reconnaître automatiquement si la communication IO-Link a lieu ou doit avoir lieu par l'intermédiaire de la quatrième broche de raccordement (4) ou si la quatrième broche de raccordement (4) est utilisée en tant que première sortie de commutation (Q1).

3. Appareil de terrain de la technique d'automatisation selon la revendication précédente, pour lequel la reconnaissance automatique s'effectue en fonction d'un appareil qui est raccordé à la quatrième broche de raccordement (4).

4. Appareil de terrain de la technique d'automatisation selon l'une des revendications précédentes, pour lequel, dans le premier état de fonctionnement dans lequel le signal 4-20 mA est mis à disposition via la première et la deuxième broche de raccordement (1, 2), la troisième et la quatrième broche de raccordement (3, 4) sont désactivées.

5. Appareil de terrain de la technique d'automatisation selon l'une des revendications précédentes, pour lequel l'électronique d'appareil de terrain (16) est conçue pour être configurée conformément à l'un des trois états de fonctionnement par l'intermédiaire de la quatrième broche de raccordement (4), par l'intermédiaire de laquelle la communication IO-Link est réalisée.

6. Appareil de terrain de la technique d'automatisation selon la revendication précédente, pour lequel la configuration est effectuée avant une mise en service de l'appareil de terrain (17) dans une installation d'automatisation, notamment dans ou pendant un montage de l'appareil de terrain.

7. Appareil de terrain de la technique d'automatisation selon l'une des revendications précédentes, pour lequel, pour faire fonctionner l'électronique d'appareil de terrain dans le troisième état de fonctionnement, une résistance de charge externe (18) est couplée entre la deuxième broche de raccordement (2) et la troisième broche de raccordement (3).
